# FASCICULE DE BREVET EUROPEEN

(11) **EP 2 807 793 B1**
(45) Date de publication et mention de la délivrance du brevet: **30.03.2016**
(21) Numéro de dépôt: 13701052.6
(22) Date de dépôt: 21.01.2013
(51) Int. Cl.: H04L 9/32, H04M 1/67

(54) **PROCEDE D'AUTHENTIFICATION D'UN DISPOSITIF COMPRENANT UN PROCESSEUR ET UNE CARTE A PUCE PAR GENERATION D'UN MOTIF**
VERFAHREN ZUR AUTHENTIFIZIERUNG EINER VORRICHTUNG MIT EINEM PROZESSOR UND EINER CHIPKARTE DURCH MUSTERERZEUGUNG
METHOD FOR AUTHENTICATING A DEVICE INCLUDING A PROCESSOR AND A SMART CARD BY PATTERN GENERATION

(30) Priorité: 25.01.2012 FR 1250727
(43) Date de publication de la demande: 03.12.2014
(73) Titulaire: Ercom Engineering Réseaux Communications, 78140 Vélizy-Villacoublay (FR)
(72) Inventeur: KOWALSKI, Julien, 91370 Verrières-le-Buisson (FR)
(74) Mandataire: Ipside
(86) Numéro de dépôt international: PCT/EP2013/051048
(87) Numéro de publication internationale: WO 2013/110571

(56) Documents cités:
- WO-A1-00/54126
- WO-A1-97/04394
- ARI JUELS ET AL: "Authenticating Pervasive Devices with Human Protocols", 1 janvier 2005 (2005-01-01), ADVANCES IN CRYPTOLOGY - CRYPTO 2005 LECTURE NOTES IN COMPUTER SCIENCE;;LNCS, SPRINGER, BERLIN, DE, PAGE(S) 293 - 308, XP019016557, ISBN: 978-3-540-28114-6 cité dans la demande figures 2,3
- WATANABE T ET AL: "On Authentication between Human and Computer", PERVASIVE COMPUTING AND COMMUNICATIONS WORKSHOPS, 2006. PERCOM WORKSHO PS 2006. FOURTH ANNUAL IEEE INTERNATIONAL CONFERENCE ON PISA, ITALY 13-17 MARCH 2006, PISCATAWAY, NJ, USA,IEEE, 13 mars 2006 (2006-03-13), pages 636-639, XP010910619, DOI: 10.1109/PERCOMW.2006.101 ISBN: 978-0-7695-2520-4 cité dans la demande

## Description

### Domaine de l'invention

La présente invention se rapporte au domaine des Technologies de l'Information et de la Communication.

La présente invention se rapporte plus particulièrement à un procédé d'authentification d'un dispositif comprenant un processeur et une carte à puce, par génération d'un motif.

La présente invention concerne un procédé permettant à un utilisateur humain d'authentifier un élément matériel capable de calculs informatiques (par exemple un micro-processeur). Cela permet à l'utilisateur de s'assurer que ce matériel est bien celui attendu et n'a pas été remplacé par une copie.

L'invention est notamment applicable à la téléphonie mobile, où un attaquant remplacerait le téléphone de l'utilisateur afin de récupérer des données sensibles (enregistrement des conversations, des données transmises sur internet, etc.).

Le cas de figure principal est le suivant :
- L'attaquant cherche à piéger le téléphone de l'utilisateur. L'état de l'art actuel permet de s'assurer de l'intégrité des logiciels (travaux du *« Trusted Computing Group »).* Cette assurance repose sur un matériel dit de confiance. Une modification des logiciels, i.e. le piégeage du téléphone, sera détecté.
- Toutefois, le cas où l'attaquant remplace ce composant de confiance n'est pas pris en compte par l'état de l'art actuel. Ainsi, en remplaçant ce matériel, il est capable de piéger les logiciels, puisqu'il maîtrise toute la chaine de vérification. L'invention permet donc à un utilisateur de détecter le remplacement du matériel de confiance

### Etat de la technique

On connaît dans l'art antérieur des procédés permettant à un humain d'authentifier un matériel informatique :
- Article *« Authenticating Pervasive Devices with Human Protocols »,* Ari Juels, Stephen A. Weis.
   ∘ Présenté à la conférence "Advances in Cryptology - CRYPTO'05", Août 2005
   o Publié dans « Lecture Notes in Computer Science Volume 3621, Advances in Cryptology - CRYPTO 2005 25th Annual International Cryptology Conference, Santa Barbara, California, USA, August 14-18, 2005. Proceedings », Victor Shoup ; pp. 293-308.

   Cet article décrit les protocoles HB et HB+ permettant à un humain d'authentifier un matériel avec peu de puissance calculatoire. Ces protocoles sont une suite de r échanges. Un faux matériel peut se faire passer pour le vrai avec une probabilité 1/2^{r}
- Article *« On Authentication between Human and Computer* », Takahiro Watanabe, Yasunobu Nohara, Kensuke Baba, Sozo Inoue, Hiroto Yasuura.
   ∘ Présenté au "workshop" "Fourth Annual IEEE International Conférence on Pervasive Computing and Communications Workshop-PerCom Workshop 2006", Mars 2006
   o Publié dans les "proceedings" "PerCom 2006 - Fourth IEEE International Conférence on Pervasive Computing and Communications WORKSHOPS", the IEEE Computer Society; pp. 636-639.

   Cet article propose une méthode d'authentification entre un humain et un ordinateur. Cette méthode emploie un matériel tiers pour l'authentification proprement dite de l'utilisateur.
- Procédé de « *sign-in seral »* de la société américaine Yahoo ! Inc. Ce procédé permet à un utilisateur humain de s'assurer qu'il se connecte au bon serveur (qui joue ici le rôle du matériel informatique à authentifier). Cette assurance est fournie par le fait que seul le vrai serveur est capable de restituer une image préalablement enregistré par l'utilisateur. L'image n'est restituée que pour une machine donnée sur laquelle l'utilisateur effectue la requête.

Le problème technique que la présente invention se propose de résoudre est celui de l'authentification mutuelle de chacun des éléments d'un système composé de :
- Un matériel informatique comprenant :
   o Un processeur
   o Des logiciels
- D'une carte à puce
- De l'utilisateur du matériel informatique et de la carte à puce.

Les solutions de l'état de la technique permettent :
- À la carte à puce d'authentifier l'utilisateur, par utilisation d'un code PIN ;
- Au logiciel d'authentifier la carte à puce par vérification d'un secret contenu dans la carte ;
- Au processeur d'authentifier le logiciel : les travaux du « *Trusted Computing Group »* fournissent une solution technique permettant de s'assurer de l'intégrité des logiciels présents sur une plateforme informatique (ordinateur personnel, smartphone, tablette, etc.).

Toutefois, un utilisateur humain n'a aucun moyen de s'assurer que son matériel n'a pas été remplacé par un adversaire, dans le but de récupérer des données sensibles (données personnelles, secrets industriels, etc.) lui appartenant.

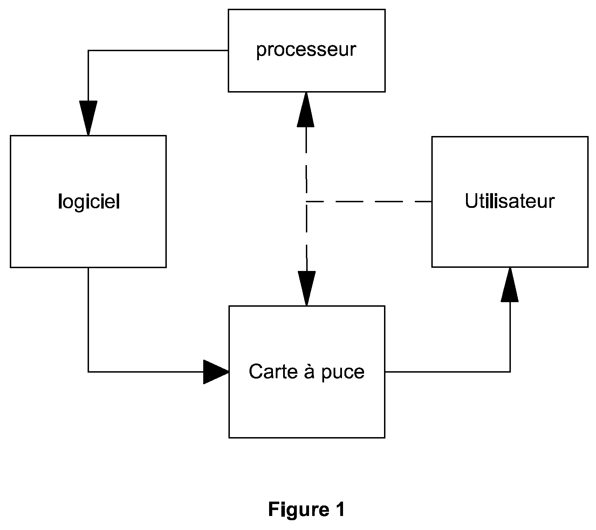

La Figure 1 illustre de manière générale la problématique d'authentification.

On connaît dans l'état de la technique la demande PCT N° WO 00/54126 (Hewlett Packard), qui décrit une interface utilisateur de carte à puce pour une plateforme informatique de confiance.

### Exposé de l'invention

La présente invention entend remédier aux inconvénients de l'art antérieur en proposant un procédé permettant à l'utilisateur d'authentifier son matériel (processeur et carte à puce), c'est à dire de combler le chaînon d'authentification manquant (en pointillé sur la Figure 1).

Le processeur doit pouvoir effectuer des calculs cryptographiques, et stocker et utiliser de manière sûre une clé secrète Kp, c'est-à-dire que la clé ne doit pas être exportable en dehors du processeur. L'algorithme utilisé pour les calculs cryptographiques peut aussi bien être symétrique qu'asymétrique.

La carte à puce doit pouvoir stocker de manière sûre une clé secrète Kc.

L'utilisateur possède un code PIN permettant de déverrouiller la carte à puce, afin de rendre accessible la clé Kc.

Le principe général du procédé selon la présente invention est le suivant : le processeur va générer un motif (chaine de caractères, image, etc.) à partir du secret de l'utilisateur (code PIN), du secret de la carte (Kc) et de son propre secret (Kp). La moindre modification d'un de ces éléments provoque la modification du motif. L'utilisateur sera capable d'authentifier son matériel en vérifiant le motif retourné.

La présente invention concerne, dans son acception la plus générale, un procédé d'authentification d'un dispositif comprenant un processeur et une carte à puce, caractérisé en ce qu'il comporte les étapes suivantes :
- déverrouillage par un utilisateur de ladite carte à puce en utilisant un code PIN ;
- transmission d'une clé secrète Kc de ladite carte à puce, et du code PIN de ladite carte à puce audit processeur ;
- calcul cryptographique au niveau dudit processeur mettant en oeuvre une clé secrète Kp du processeur, le code PIN et Kc ;
- génération par ledit processeur d'un motif lisible par un être humain à partir dudit calcul cryptographique ;
- transmission dudit motif à l'utilisateur ; et
- comparaison par l'utilisateur dudit motif généré par le dispositif avec un motif mémorisé par l'utilisateur.

Le motif mémorisé par l'utilisateur a été généré de la même manière, mais dans un environnement sûr ; c'est-à-dire à un moment où l'utilisateur est sûr que son matériel est authentique.

Le procédé selon la présente invention permet à l'utilisateur d'authentifier le dispositif. En effet, la méthode de génération du motif assure que seul un matériel utilisant la bonne clef Kp est capable de fournir la réponse valide au défi donné par l'utilisateur. L'utilisation de la clef Kc empêche un attaquant de simplement demander de générer l'ensemble des motifs possibles, pour les présenter à l'utilisateur lors de l'entrée de son code PIN ; et enfin l'utilisation du code PIN permet d'obtenir un motif différent en changeant ce code si jamais un attaquant a pu compromettre le motif, et permet également d'interdire l'accès à la clef Kc en le conditionnant à l'entrée de ce code PIN sur la carte à puce.

Selon un mode de réalisation, ledit motif est une chaîne de caractères.

Selon un autre mode de réalisation, ledit motif est une image.

Selon un autre mode de réalisation, ledit motif est un son ou une suite de sons.

Selon un autre mode de réalisation, ledit motif est un retour haptique (une suite de vibrations).

Selon un autre mode de réalisation, ledit motif est issu d'une combinaison de plusieurs modes de génération de motifs dans le groupe comprenant : une chaîne de caractères, une image, une suite de sons et un retour haptique (une suite de vibrations).

Les différents types de motif ne doivent alors pas être corrélés entre eux, c'est-à-dire qu'ils doivent avoir été générés à partir de parties indépendantes du résultat du calcul cryptographique.

Selon une variante, ledit calcul cryptographique est un algorithme de chiffrement symétrique.

Selon une autre variante, ledit calcul cryptographique est un hachage cryptographique avec clé.

Selon une autre variante, ledit calcul cryptographique est un chiffrement asymétrique déterministe.

Avantageusement, ledit calcul cryptographique est un calcul de type HMAC.

Selon un mode, l'affichage dudit motif est effectué si l'utilisateur effectue une action.

Selon un mode de mise en oeuvre particulier, ladite action de l'utilisateur correspond à un appui par ledit utilisateur sur une touche pendant une durée supérieure à un seuil prédéterminé.

Avantageusement, ledit motif est une chaîne de caractères correspondant à la représentation hexadécimale du résultat dudit calcul cryptographique.

De préférence, ledit calcul cryptographique est réalisé au sein d'un emplacement de confiance (« *trusted zone »* en terminologie anglo-saxonne) dudit processeur.

Selon un mode de réalisation, ledit motif est obtenu en conservant les quatre premiers octets de la réponse du calcul cryptographique représentés sous forme hexadécimale, soit huit caractères hexadécimaux.

Selon un mode de réalisation, ladite image est une image fractale ayant la réponse du calcul cryptographique pour graine.

De plus, par rapport aux solutions de l'art antérieur décrites ci-dessus :
- L'authentification se fait avec peu d'échanges entre le matériel et l'utilisateur, ni calculs de la part de l'utilisateur contrairement à la solution décrite dans l'article *« Authenticating Pervasive Devices with Human Protocols »* cité ci-dessus,
- Ce mécanisme permet à l'utilisateur d'authentifier à la fois le processeur et la carte à puce ;
- Contrairement à la solution décrite dans l'article « *On Authentication between Human and Computer »* cité ci-dessus, la carte à puce n'a pas besoin d'effectuer de calcul, ni de présenter une interface de confiance à l'utilisateur ; Contrairement à la solution décrite dans l'article « *On Authentication between Human and Computer»* cité ci-dessus, la solution se suffit à elle-même : l'utilisateur n'a pas besoin de faire confiance au token cryptographique (la carte à puce) utilisé.
- Contrairement au procédé de « *sign-in seal »* de la société américaine Yahoo! Inc, la solution se suffit à elle-méme : la solution de la société Yahoo! demande pour être efficace d'être utilisée sur une machine sûre afin d'authentifier le serveur distant. En effet, la compromission du cookie sur la machine de l'utilisateur permet à un attaquant de récupérer le motif sur le serveur distant et ainsi de pouvoir l'afficher à l'utilisateur.

### Brève description des dessins

On comprendra mieux l'invention à l'aide de la description, faite ci-après à titre purement explicatif, d'un mode de réalisation de l'invention, en référence aux Figures dans lesquelles :
- la Figure 1 illustre de manière générale la problématique d'authentification ;
- la Figure 2 représente de manière générale le procédé selon la présente invention ;
- la Figure 3 illustre des exemples de motifs ; et
- la Figure 4 représente un mode de réalisation du procédé selon la présente invention.

### Description détaillée des modes de réalisation de l'invention

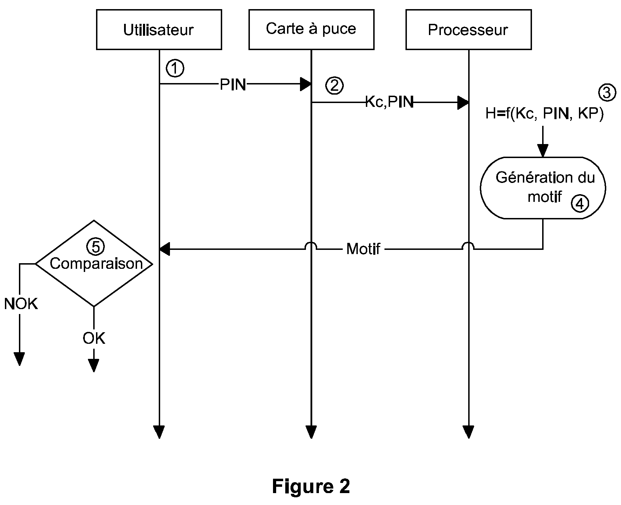

La Figure 2 représente de manière générale le procédé selon la présente invention.

Selon la présente invention, le procédé d'authentification d'un dispositif comprenant un processeur et une carte à puce, comporte les étapes suivantes :
- déverrouillage par un utilisateur de ladite carte à puce en utilisant un code PIN ;
- transmission d'une clé secrète Kc de ladite carte à puce, et du code PIN de ladite carte à puce audit processeur ;
- calcul cryptographique au niveau dudit processeur mettant en oeuvre une clé secrète Kp du processeur, le code PIN et Kc ;
- génération par ledit processeur d'un motif lisible par un être humain à partir dudit calcul cryptographique ;
- transmission dudit motif à l'utilisateur ; et
- comparaison par l'utilisateur dudit motif généré par le dispositif avec un motif mémorisé par l'utilisateur.

Il existe de multiples variantes possibles concernant le calcul cryptographique effectué par le processeur. Toute fonction cryptographique générant une réponse pseudo-aléatoire dépendant de la clef Kp, et gardant Kp secrète, convient (chiffrement AES, haché avec clef, chiffrement asymétrique déterministe, etc.). Un mode de réalisation particulièrement avantageux consiste en l'utilisation d'un calcul de HMAC-SHA256 de la manière suivante :
HMAC-SHA256[Kp]( PIN, Kc)

L'étape du procédé consistant en la génération du motif à partir de la réponse aléatoire possède également de multiples variantes :
- Générer une chaine de caractères représentant cette réponse (affichage hexadécimal, encodé en base64, etc.)
- Générer une image qui est une représentation unique de cette réponse.
   Par exemple :
   ∘ Génération d'une image fractale ayant cette réponse pour graine ;
   ∘ Utilisation du procédé fourni à l'URL suivante :
      http://www.thevash.com/
- Générer une suite de sons dont chaque note représente quelques bits de la réponse ;
- Etc.

La durée d'affichage du motif pourra être ajustée en fonction d'un compromis entre le confort et la sécurité. Dans une variante, le motif peut n'être affiché que si l'utilisateur le demande par une action particulière (par exemple un appui long sur la touche « entrée »).

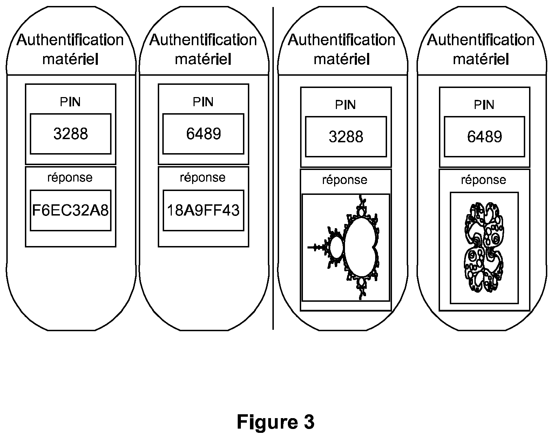

La Figure 3 illustre des exemples de motifs. Sur les deux exemples de gauche, le motif généré est une chaîne de caractères correspondant à la représentation hexadécimale du résultat du calcul cryptographique, ce qui est un mode de réalisation particulièrement avantageux. Sur les deux exemples de droite, le motif généré est une image.

Une application envisagée du procédé selon la présente invention est l'implémentation sur processeur ARM. En effet, ce type de processeur possède un espace appelé emplacement de confiance ou « *trusted zone »* en terminologie anglo-saxonne, permettant de stocker une clef secrète K. Ce type de processeur est capable de mettre en oeuvre des calculs faisant intervenir K sans pour autant exposer cette clef.

Un mode de réalisation du procédé selon la présente invention est le suivant :
- Le calcul cryptographique effectué par le processeur est un HMAC-SHA256 :
   HMAC-SHA256[Kp](Kc, PIN) ;
- Ce calcul cryptographique est effectué au sein de la « trusted zone » du processeur ;
- Le motif est obtenu en gardant les 4 premiers octets de la réponse représentés sous forme hexadécimale, soit 8 caractères hexadécimaux.

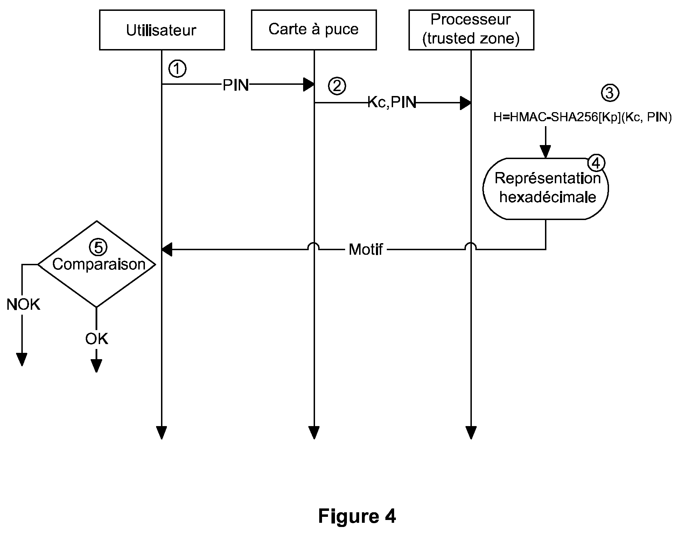

La suite d'échanges se présente alors comme représenté Figure 4.

Le fait que la clef Kp reste secrète et interne au processeur assure que seul le processeur valide est capable de générer le motif correspondant au couple (PIN, Kc) et mémorisé par celui-ci.

Le fait que la clef Kc soit protégée par la carte à puce (via le code PIN) interdit à un attaquant d'utiliser le processeur en boîte noire afin de générer à l'avance l'ensemble des réponses possibles, pour chaque code PIN.

Ainsi, un attaquant qui remplace :
- Le processeur uniquement ne pourra pas leurrer l'utilisateur : la clef Kp étant secrète, il ne pourra pas générer le bon motif
- La carte à puce uniquement ne pourra pas leurrer l'utilisateur : la clef Kc étant secrète puisque protégée par le code PIN de l'utilisateur, il ne pourra pas générer le bon motif
- Le processeur et la carte à puce ne pourra pas leurrer l'utilisateur : les clefs Kc et Kp étant secrètes, il ne pourra pas générer le bon motif.

Le fait que la génération du motif puisse se faire selon une combinaison de procédés faisant intervenir différents sens de l'utilisateur permet de renforcer la sécurité face au risque de compromission du motif légitime.

Dans le cas où le motif comprend :
- Une partie visuelle (image) et
- Une partie sonore (suite de sons) et
- Une partie sensitive (suite de vibrations) ;
un attaquant ayant pu observer la partie visuelle du motif (via une caméra de surveillance par exemple) ne pourra pas générer de motif valide : il lui manquera les parties sonores et sensitives. Ceci est dû au fait que les différentes parties du motif sont générées de manière indépendantes : l'obtention d'une partie du motif ne permet pas d'obtenir d'information sur les autres parties, et donc de reproduire l'intégralité du motif.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé d'authentification d'un dispositif comprenant un processeur et une carte à puce, **caractérisé en ce qu'**il comporte les étapes suivantes :
• déverrouillage par un utilisateur de ladite carte à puce en utilisant un code PIN ;
• transmission d'une clé secrète Kc de ladite carte à puce, et du code PIN de ladite carte à puce audit processeur ;
• calcul cryptographique au niveau dudit processeur mettant en oeuvre une clé secrète Kp du processeur, le code PIN et Kc ;
• génération par ledit processeur d'un motif lisible par un être humain à partir dudit calcul cryptographique ;
• transmission dudit motif à l'utilisateur ; et
• comparaison par l'utilisateur dudit motif généré par le dispositif avec un motif mémorisé par l'utilisateur.

2. Procédé selon la revendication 1, **caractérisé en ce que** ledit motif est une chaîne de caractères.

3. Procédé selon la revendication 1, **caractérisé en ce que** ledit motif est une image.

4. Procédé selon la revendication 1, **caractérisé en ce que** ledit motif est un son ou une suite de sons.

5. Procédé selon la revendication 1, **caractérisé en ce que** ledit motif est un retour haptique (une suite de vibrations).

6. Procédé selon la revendication 1, **caractérisé en ce que** ledit motif est issu d'une combinaison de plusieurs modes de génération de motifs dans le groupe comprenant : une chaîne de caractères, une image, une suite de sons et un retour haptique (une suite de vibrations).

7. Procédé selon l'une des revendications précédentes, **caractérisé en ce que** ledit calcul cryptographique est un algorithme de chiffrement symétrique.

8. Procédé selon l'une des revendications 1 à 6, **caractérisé en ce que** ledit calcul cryptographique est un hachage cryptographique avec clé.

9. Procédé selon l'une des revendications 1 à 6, **caractérisé en ce que** ledit calcul cryptographique est un chiffrement asymétrique déterministe.

10. Procédé selon l'une des revendications 1 à 6, **caractérisé en ce que** ledit calcul cryptographique est un calcul de type HMAC.

11. Procédé selon l'une quelconque des revendications précédentes, **caractérisé en ce que** l'affichage dudit motif est effectué si l'utilisateur effectue une action.

12. Procédé selon la revendication précédente, **caractérisé en ce que** ladite action de l'utilisateur correspond à un appui par ledit utilisateur sur une touche pendant une durée supérieure à un seuil prédéterminé.

13. Procédé selon l'une quelconque des revendications précédentes, **caractérisé en ce que** ledit motif est une chaîne de caractères correspondant à la représentation hexadécimale du résultat dudit calcul cryptographique.

14. Procédé selon l'une quelconque des revendications précédentes, **caractérisé en ce que** ledit calcul cryptographique est réalisé au sein d'un emplacement de confiance (« *trusted zone »* en terminologie anglo-saxonne) dudit processeur.

15. Procédé selon la revendication 13, **caractérisé en ce que** ledit motif est obtenu en conservant les quatre premiers octets de la réponse du calcul cryptographique représentés sous forme hexadécimale, soit huit caractères hexadécimaux.

16. Procédé selon la revendication 3, **caractérisé en ce que** ladite image est une image fractale ayant la réponse du calcul cryptographique pour graine.

## Patentansprüche

1. Verfahren zur Authentifizierung einer Vorrichtung mit einem Prozessor und einer Chipkarte, **dadurch gekennzeichnet, dass** es die folgenden Schritte aufweist:
• Entriegeln der Chipkarte durch einen Nutzer unter Verwendung eines PIN-Codes;
• Übertragen eines geheimen Schlüssels Kc der Chipkarte und des PIN-Codes der Chipkarte an den Prozessor;
• kryptographisches Berechnen an dem Prozessor, indem ein geheimer Schlüssel Kp des Prozessors, der PIN-Code und Kc angewendet werden;
• Erzeugen durch den Prozessor eines Musters, das für einen Menschen lesbar ist, ausgehend von der kryptographischen Berechnung;
• Übertragen des Musters an den Nutzer; und
• Vergleichen durch den Nutzer des Musters, das durch die Vorrichtung erzeugt wird, mit einem Muster, das von dem Nutzer gespeichert wird.

2. Verfahren nach Anspruch 1, **dadurch gekennzeichnet, dass** das Muster eine Zeichenkette ist.

3. Verfahren nach Anspruch 1, **dadurch gekennzeichnet, dass** das Muster ein Bild ist.

4. Verfahren nach Anspruch 1, **dadurch gekennzeichnet, dass** das Muster ein Ton oder eine Tonfolge ist.

5. Verfahren nach Anspruch 1, **dadurch gekennzeichnet, dass** das Muster eine haptische Rückkopplung (eine Vibrationsfolge) ist.

6. Verfahren nach Anspruch 1, **dadurch gekennzeichnet, dass** das Muster aus einer Kombination von mehreren Modi zum Erzeugen von Mustern in der Gruppe hervorgegangen ist, die: eine Zeichenkette, ein Bild, eine Tonfolge und eine haptische Rückkopplung (eine Vibrationsfolge) aufweist.

7. Verfahren nach einem der vorhergehenden Ansprüche, **dadurch gekennzeichnet, dass** die kryptographische Berechnung ein Algorithmus der symmetrischen Verschlüsselung ist.

8. Verfahren nach einem der Ansprüche 1 bis 6, **dadurch gekennzeichnet, dass** die kryptographische Berechnung ein kryptographisches Hashen mit Schlüssel ist.

9. Verfahren nach einem der Ansprüche 1 bis 6, **dadurch gekennzeichnet, dass** die kryptographische Berechnung eine deterministische asymmetrische Verschlüsselung ist.

10. Verfahren nach einem der Ansprüche 1 bis 6, **dadurch gekennzeichnet, dass** die kryptographische Berechnung eine HMAC-Berechnung ist.

11. Verfahren nach einem der vorhergehenden Ansprüche, **dadurch gekennzeichnet, dass** das Anzeigen des Musters durchgeführt wird, wenn der Nutzer eine Handlung ausführt.

12. Verfahren nach dem vorhergehenden Anspruch, **dadurch gekennzeichnet, dass** die Handlung des Nutzers einem Druck auf eine Taste durch den Nutzer während einer Dauer, die größer als ein vorgegebener Schwellenwert ist, entspricht.

13. Verfahren nach einem der vorhergehenden Ansprüche, **dadurch gekennzeichnet, dass** das Muster eine Zeichenkette ist, die der hexadezimalen Darstellung des Ergebnisses der kryptographischen Berechnung entspricht.

14. Verfahren nach einem der vorhergehenden Ansprüche, **dadurch gekennzeichnet, dass** die kryptographische Berechnung in einer vertrauenswürdigen Zone (*"Trusted Zone"* auf Englisch) des Prozessors durchgeführt wird.

15. Verfahren nach Anspruch 13, **dadurch gekennzeichnet, dass** das Muster erhalten wird, indem die ersten vier Bytes der Antwort der kryptographischen Berechnung, die hexadezimal dargestellt werden, das heißt acht hexadezimale Zeichen, beibehalten werden.

16. Verfahren nach Anspruch 3, **dadurch gekennzeichnet, dass** das Muster ein fraktales Bild ist, das die Antwort der kryptographischen Berechnung als Maserung aufweist.

## Claims

1. Method for authenticating a device comprising a processor and a smart card, **characterized in that** it has the following steps:
• unlocking of said smart card by a user using a PIN code;
• transmission of a secret key Kc from said smart card, and of the PIN code from said smart card, to said processor;
• cryptographic computation on said processor implementing a secret key Kp for the processor, the PIN code and Kc;
• generation, by said processor, of a pattern that can be read by a human being from said cryptographic computation;
• transmission of said pattern to the user; and
• comparison, by the user, of said pattern generated by the device with a pattern stored in memory by the user.

2. Method according to Claim 1, **characterized in that** said pattern is a character string.

3. Method according to Claim 1, **characterized in that** said pattern is an image.

4. Method according to Claim 1, **characterized in that** said pattern is a sound or a succession of sounds.

5. Method according to Claim 1, **characterized in that** said pattern is a haptic feedback (a succession of vibrations).

6. Method according to Claim 1, **characterized in that** said pattern stems from a combination of a plurality of ways of generating patterns in the group comprising: a character string, an image, a succession of sounds and a haptic feedback (a succession of vibrations).

7. Method according to one of the preceding claims, **characterized in that** said cryptographic computation is a symmetric encryption algorithm.

8. Method according to one of Claims 1 to 6, **characterized in that** said cryptographic computation is a cryptographic key hashing.

9. Method according to one of Claims 1 to 6, **characterized in that** said cryptographic computation is a deterministic asymmetric encryption.

10. Method according to one of Claims 1 to 6, **characterized in that** said cryptographic computation is a computation of HMAC type.

11. Method according to any one of the preceding claims, **characterized in that** the display of said pattern is carried out if the user carries out an action.

12. Method according to the preceding claim, **characterized in that** said action of the user corresponds to a touch of a button by said user for a period greater than a predetermined threshold.

13. Method according to any one of the preceding claims, **characterized in that** said pattern is a character string corresponding to the hexadecimal representation of the result of said cryptographic computation.

14. Method according to any one of the preceding claims, **characterized in that** said cryptographic computation is implemented within a trusted zone of said processor.

15. Method according to Claim 13, **characterized in that** said pattern is obtained by preserving the first four bytes of the response of the cryptographic computation that are represented in hexadecimal form, or eight hexadecimal characters.

16. Method according to Claim 3, **characterized in that** said image is a fractal image having the response of the cryptographic computation for seed.
